# EUROPEAN PATENT APPLICATION

(11) **EP 1 531 564 A2**
(43) Date of publication of application: **18.05.2005**
(21) Application number: 04026573.8
(22) Date of filing: 09.11.2004
(51) Int. Cl.: H04B 10/18

(54) **Optical dispersion compensation device and method in optical communication system**

(30) Priority: 12.11.2003 KR 2003079821
(71) Applicant: LG ELECTRONICS INC., Seoul (KR)
(72) Inventor: Park, Jung-Jae, Seoul (KR)
(74) Representative: von Hellfeld, Axel, Dr. Dipl.-Phys.

(57) **Abstract**

The present invention discloses an optical dispersion compensation device and method in an optical communication system. The optical dispersion compensation device and method prevent distortion of an optical signal by removing residual dispersion of each wavelength band of the optical signal passing through a common dispersion compensation optical fiber, by splitting the optical signal into wavelength bands and passing the optical signals of each wavelength band through a different length of dispersion compensation optical fibers.

## Description

### BACKGROUND OF THE INVENTION

### 1. Field of the Invention

The present invention relates to an optical dispersion compensation device and method in an optical communication system, and more particularly to, a device and method for compensating for dispersion of wavelengths, respectively.

### 2. Description of the Background Art

Recently, computer and communication technologies that are information-related technologies have been considerably developed through high speed optical fiber communication technologies which can transmit and receive a large volume of information. Especially, technologies for transmitting and receiving more information in the same optical transmission line without distortion are required due to current tendencies such as high rate transmission of multimedia information including various types of data such as moving pictures, voice signals and character signals, bidirectional interactive communication environment, and an enormous increase of subscribers.

That is, technologies for changing a transmission line into a broadband and dividing more channels in a predetermined bandwidth are necessary. An optical fiber used as the transmission line of the optical communication consists of an optical waveguide containing silicon oxide as a major element. The optical fiber has wave characteristics for an optical signal of a channel having different wavelengths. According to the characteristics of the optical fiber transmission line, after the optical signal outputted from a transmitter passes through a predetermined distance of optical fiber transmission line, distortion of the optical signal must be compensated for, to embody communication without errors.

The distortion of the optical signal means loss of the optical signal energy and dispersion of the optical signal. The loss of the optical signal energy can be efficiently compensated for by using an optical fiber amplifier containing Er, thereby embodying ultrahigh speed long distance transmission of the optical signal. Therefore, the problem that must be solved for the ultrahigh speed long distance optical communication is the dispersion of the optical signal.

The dispersion implies dispersion of an optical pulse passing through the optical fiber. In 1550nm band, the optical fiber has a dispersion coefficient of D=17~18ps/nm/km, approximately.

For example, in a Wavelength Division Multiplexing (WDM) optical transmission system, when an optical signal is transmitted over 10Gbps level per channel, dispersion of the optical signal must be compensated for. In addition, for example, when a transmission speed of an optical signal is 10Gbps, if a transmission distance is over 60km, the optical signal is distorted. It is thus difficult to transmit the optical signal over 100km.

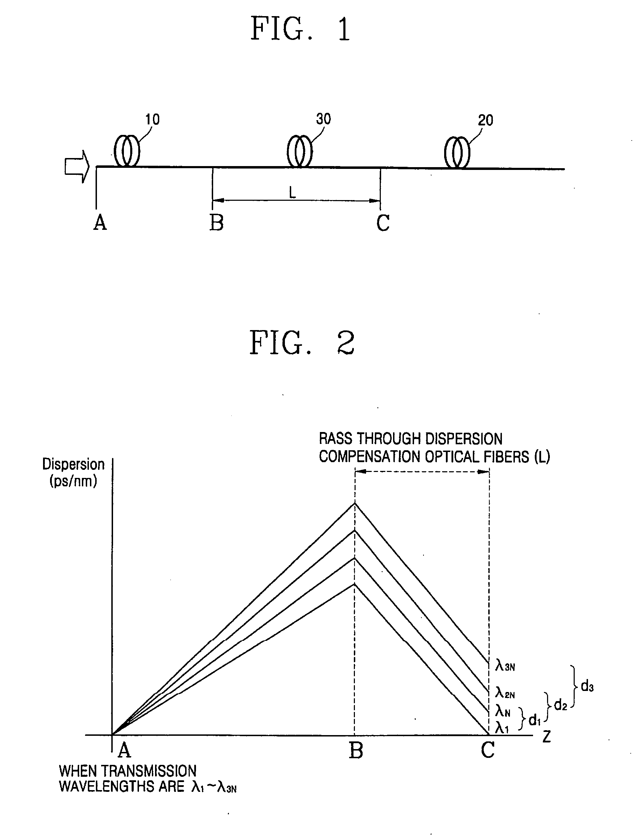

Fig. 1 is a schematic structure diagram illustrating a conventional optical dispersion compensation device using a dispersion compensation optical fiber in a optical communication system. Referring to Fig. 1, the conventional optical dispersion compensation device in the optical communication system includes a dispersion compensation optical fiber 30 for compensating for dispersion of an optical signal from an input optical fiber 10, and outputting the dispersion compensation optical signal to an output optical fiber 20.

The input optical fiber 10 and the output optical fiber 20 are general optical fibers that are transmission lines.

Fig. 2 is a graph showing dispersion compensation results by the general dispersion compensation optical fiber 30.

In general, ideal dispersion of the optical fiber must have a constant value in the whole wavelength area. However, dispersion of the whole optical fibers is changed according to wavelengths with a predetermined gradient. That is, when the gradient decreases, variation amounts of dispersion according to the wavelengths are reduced.

In the WDM optical transmission system, when the optical signal passes through the input optical fiber 10 at a transmission speed over 10Gbps (point B), a different amount of dispersion is generated in each wavelength of the optical signal. The optical signal having dispersion in each wavelength is inputted to the dispersion compensation optical fiber 30. After dispersion of the optical signal is compensated for by the dispersion compensation optical fiber 30, residual dispersion exists in each channel (each wavelength) of the optical signal due to wavelength dependency of the dispersion coefficient of the dispersion compensation optical fiber 30 (point C). For example, as shown in Fig. 2, when dispersion of λ₁~λ_{3N} transmission wavelengths is compensated for by the dispersion compensation optical fiber 30, dispersion of λ₁ wavelength is completely compensated for. However, residual dispersion d₁, d₂ and d₃ exists in λ_{N}, λ_{2N} and λ_{3N} wavelengths. In the case of the long distance transmission, the residual dispersion is linearly seriously accumulated through a few dispersion compensation optical fibers. Although a different amount of dispersion is generated in each wavelength, the conventional optical dispersion compensation device using the dispersion compensation optical fiber compensates for dispersion of the whole wavelengths by a predetermined length (L in Fig. 2). As a result, the conventional optical dispersion compensation device cannot precisely compensate for dispersion of each wavelength, thereby increasing signal distortion.

### SUMMARY OF THE INVENTION

Therefore, an object of the present invention is to provide an optical dispersion compensation device and method in an optical transmission system which can precisely compensate for dispersion of all transmission wavelengths, by varying an amount of dispersion compensation of each transmission wavelength, by compensating for dispersion of the transmission wavelengths, respectively.

To achieve these and other advantages and in accordance with the purpose of the present invention, as embodied and broadly described herein, there is provided an optical dispersion compensation device in an optical communication system, including: an input port connected to an input optical fiber; an output port connected to an output optical fiber; an optical band splitter for splitting the optical signal from the input port into wavelengths; a plurality of dispersion compensation optical fibers for dispersion-compensating the optical signals of each split wavelength with a different amount of dispersion compensation; and a converging means for converging the optical signals passing through each dispersion compensation optical fiber into the output port.

Preferably, the converging means includes: a plurality of optical reflectors for reflecting the optical signals of each wavelength passing through each dispersion compensation optical fiber, respectively; and a plurality of optical attenuators connected between the dispersion compensation optical fibers and the optical reflectors, for attenuating intensity of the optical signals of each wavelength into a predetermined level, respectively.

Preferably, the optical dispersion compensation device further includes: an optical circulator for transmitting the optical signal from the input port to the optical band splitter, and transmitting the optical signal from the optical band splitter to the output port; and a common dispersion compensation optical fiber connected between the optical circulator and the optical band splitter, for commonly compensating dispersion of the whole wavelengths of the optical signal.

Preferably, the optical band splitters are installed as many as a number of wavelength bands split from the optical signal.

According to another aspect of the present invention, an optical dispersion compensation method in an optical communication system includes the steps of: splitting an optical signal into transmission wavelength bands; and removing residual dispersion, by passing the optical signals of each split wavelength band through a different length of dispersion compensation optical fibers, respectively.

Preferably, the optical dispersion compensation method in the optical communication system further includes a step for commonly compensating for dispersion of the whole transmission wavelength bands of the optical signal, by using a common dispersion compensation optical fiber.

Preferably, the optical dispersion compensation method in the optical communication system further includes a step for attenuating intensity of the optical signals of each wavelength band passing through each dispersion compensation optical fiber into a predetermined level, respectively.

Preferably, the optical dispersion compensation method in the optical communication system further includes a step for reflecting the optical signals of each wavelength band, respectively.

Preferably, the dispersion compensation optical fiber for compensating for dispersion of the optical signal of the wavelength band having the longest wavelength has the longest length, and the dispersion compensation optical fiber for compensating for dispersion of the optical signal of the wavelength band having the shortest wavelength has the shortest length.

Preferably, the length of each dispersion compensation optical fiber is 1/2 of the length for completely removing residual dispersion of the optical signal of the corresponding wavelength band.

Preferably, 1/2 of the residual dispersion of the optical signals of each split wavelength band is removed respectively by a different length of dispersion compensation optical fibre, and the optical signals are attenuated into a predetermined level by each optical attenuator, reflected by each optical reflector, and re-pass through each optical attenuator and each dispersion compensation optical fiber.

Preferably, the optical signal of the wavelength band having the longest wavelength among the optical signals of the split wavelength bands does not pass through the optical attenuator.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a schematic structure diagram illustrating a conventional optical dispersion compensation device using a dispersion compensation optical fiber in an optical communication system;
Fig. 2 is a graph showing dispersion compensation results by the conventional dispersion compensation optical fiber;
Fig. 3 is a structure diagram illustrating an optical dispersion compensation device in an optical communication system in accordance with the present invention; and
Fig. 4 is a graph showing transmission wavelengths whose residual dispersion has been removed, after dispersion of each transmission wavelength is compensated for by the optical dispersion compensation device in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

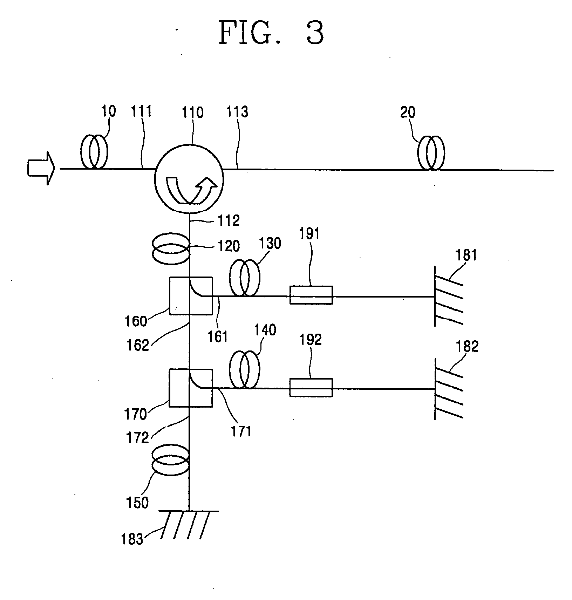

Fig. 3 is a structure diagram illustrating an optical dispersion compensation device in an optical communication system in accordance with the present invention. As illustrated in Fig. 3, the optical dispersion compensation device in the optical communication system includes an optical circulator 110 for transmitting an optical signal inputted from an input optical fiber 10 to a first port 111 to a second port 112, and outputting an optical signal inputted to the second port 112 to an output optical fiber 20 through a third port 113, a common dispersion compensation optical fiber 120 for commonly compensating for dispersion of the optical signal from the second port 112 of the optical circulator 110, a plurality of optical band splitters 160 and 170 for splitting the optical signal from the common dispersion compensation optical fiber 120 into wavelength bands, a plurality of band dispersion compensation optical fibers 130, 140 and 150 connected respectively to output ports 161, 171 and 172 of the plurality of optical band splitters 160 and 170 to have a different length in each wavelength band, and a plurality of optical reflectors 181, 182 and 183 for reflecting the optical signals of each wavelength band passing through each band dispersion compensation optical fiber 130, 140 and 150, respectively.

Fig. 3 shows two optical band splitters 160 and 170. However, a number of optical band splitters is dependent upon a number of transmission wavelength bands split for dispersion compensation of wavelengths.

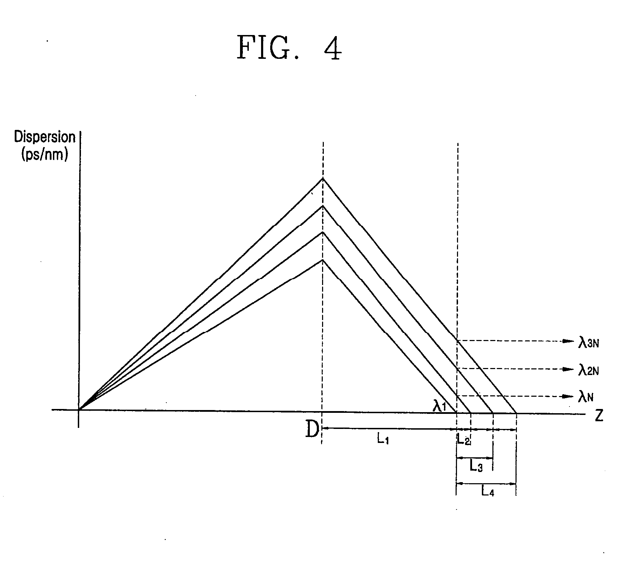

Fig. 4 is a graph showing transmission wavelengths whose residual dispersion has been removed, after dispersion of each transmission wavelength is compensated for by the optical dispersion compensation device in accordance with the present invention. In the case that the transmission wavelengths λ₁~λ_{3N} of the optical signal are divided into λ₁~λ_{N}, λ_{N+1}~λ_{2N} and λ_{2N+1}~λ_{3N} bands and dispersion thereof is compensated for, L1 is a length of a dispersion compensation optical fiber for commonly compensating for dispersion of the whole wavelengths λ₁~λ_{3N} of the optical signal, L2 is a length of a dispersion compensation optical fiber for removing residual dispersion of λ₁~λ_{N} band, L3 is a length of a dispersion compensation optical fiber for removing residual dispersion of λ_{N+1}~λ_{2N} band, and L4 is a length of a dispersion compensation optical fiber for removing residual dispersion of λ_{2N+1}~λ_{3N} band.

The common dispersion compensation optical fiber 120 is formed to have a length corresponding to 1/2 of L1 of Fig. 4, the first band dispersion compensation optical fiber 130 is formed to have a length corresponding to 1/2 of L2 of Fig. 4, the second band dispersion compensation optical fiber 140 is formed to have a length corresponding to 1/2 of L3 of Fig. 4, and the third band dispersion compensation optical fiber 150 is formed to have a length corresponding to 1/2 of L4 of Fig. 4.

Since the length of the first band dispersion compensation optical fiber 130 is shorter than that of the third band dispersion compensation optical fiber 150, intensity (or strength) of the optical signal passing through the third band dispersion compensation optical fiber 150 is lower than that of the optical signal passing through the first band dispersion compensation optical fiber 130. Accordingly, when the optical signal passing through the first band dispersion compensation optical fiber 130 and the optical signal passing through the third band dispersion compensation optical fiber 150 are inputted to the common dispersion compensation optical fiber 120, different intensity of optical signals are combined. Therefore, a first optical attenuator 191 is connected between the first band dispersion compensation optical fiber 130 and the first optical reflector 181, and a second optical attenuator 192 is connected between the second band dispersion compensation optical fiber 140 and the second optical reflector 182.

The first optical attenuator 191 attenuates the optical signal λ₁~λ_{N} as much as an attenuation amount when the optical signal λ₁~λ_{N} passes through L4-L2 length of dispersion compensation optical fiber in Fig. 4. The second optical attenuator 192 attenuates the optical signal λ_{N+1}~λ_{2N} as much as an attenuation amount when the optical signal λ_{N+1}~λ_{2N} passes through L4-L3 length of dispersion compensation optical fiber in Fig. 4. As a result, the optical signals passing through the first to third band dispersion compensation optical fibers 130, 140 and 150 respectively have the same intensity.

The operation of the optical dispersion compensation device in the optical communication system in accordance with the present invention will now be explained.

When the optical signal having λ₁∼λ_{3N} transmission wavelengths reaches the first port 111 through the input optical fiber 10, as shown in D of Fig. 4, each wavelength is dispersed at a different amount.

The optical circulator 110 outputs the optical signal reaching the first port 111 to the second port 112. The common dispersion compensation optical fiber 120 having 1/2 length of L2 compensates for dispersion of the optical signal from the second port 112. The first optical band splitter 160 outputs λ₁~λ_{N} band transmission wavelength of the optical signal passing through the common dispersion compensation optical fiber 120 to the first output port 161, and outputs the other wavelengths λ_{N+1}~λ_{3N} of the optical signal to the second output port 162. The second optical band splitter 170 outputs λ_{N+1}~λ_{2N} band transmission wavelength of the optical signal from the second output port 162 to the first output port 171, and outputs the other wavelengths λ_{2N+1}~λ_{3N} of the optical signal to the second output port 172.

Accordingly, the optical signal of λ₁~λ_{N} band transmission wavelength is dispersion-compensated through the first band dispersion compensation optical fiber 130 having 1/2 length of L2, passes through the first optical attenuator 191, is reflected by the first optical reflector 181, and re-passes through the first optical attenuator 191, the first band dispersion compensation optical fiber 130 and the first optical band splitter 160.

In addition, the optical signal of λ_{N+1}~λ_{2N} band transmission wavelength is dispersion-compensated through the second band dispersion compensation optical fiber 140 having 1/2 length of L3, passes through the second optical attenuator 192, is reflected by the second optical reflector 182, and re-passes through the second optical attenuator 192, the second band dispersion compensation optical fiber 140 and the second optical band splitter 170.

The optical signal of λ_{2N+1}~λ_{3N} band transmission wavelength is dispersion-compensated through the third band dispersion compensation optical fiber 150 having 1/2 length of L4, is reflected by the third optical reflector 183, and re-passes through the third band dispersion compensation optical fiber 150 and the second optical band splitter 170.

The optical signal of λ₁~λ_{N} band transmission wavelength, the optical signal of λ_{N+1}~λ_{2N} band transmission wavelength and the optical signal of λ_{2N+1}~λ_{3N} band transmission wavelength that are split by the first optical band splitter 160 and the second optical band splitter 170 are dispersion-compensated by the common dispersion compensation optical fiber 120 having 1/2 length of L1, and outputted to the third port 113 by the optical circulator 110.

The optical signal of λ₁~λ_{N} band transmission wavelength passes through the first band dispersion compensation optical fiber 130 twice and the common dispersion compensation optical fiber 120 twice, thereby passing through L1+L2 length of dispersion compensation optical fiber. In addition, the optical signal of λ_{N+1}~λ_{2N} band transmission wavelength passes through the second band dispersion compensation optical fiber 140 twice and the common dispersion compensation optical fiber 120 twice, thereby passing through L1+L3 length of dispersion compensation optical fiber. On the other hand, the optical signal of λ_{2N+1}~λ_{3N} band transmission wavelength passes through the third band dispersion compensation optical fiber 150 twice and the common dispersion compensation optical fiber 120 twice, thereby passing through L1+L4 length of dispersion compensation optical fiber.

In the optical dispersion compensation device, the optical attenuators compensate for optical attenuation differences generated when the optical signals pass through the different length of dispersion compensation optical fibers.

Even if the dispersion amount of each wavelength is different, the optical dispersion compensation device removes the residual dispersion by passing the optical signals of each wavelength through the different length of dispersion compensation optical fibers.

As discussed earlier, in accordance with the present invention, the optical dispersion compensation device precisely compensates for dispersion of the whole transmission wavelengths of the optical signal and prevents signal distortion, by varying the amount of dispersion compensation of each transmission wavelength, by passing the optical signals of each wavelength through the different length of dispersion compensation optical fibers.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An optical dispersion compensation device in an optical communication system, comprising:
an input port connected to an input optical fiber;
an output port connected to an output optical fiber;
an optical band splitter for splitting the optical signal from the input port into wavelengths;
a plurality of dispersion compensation optical fibers for dispersion-compensating the optical signals of each split wavelength with a different amount of dispersion compensation; and
a converging means for converging the optical signals passing through each dispersion compensation optical fiber into the output port.

2. The device of claim 1, wherein the converging means comprises:
a plurality of optical reflectors for reflecting the optical signals of each wavelength passing through each dispersion compensation optical fiber, respectively; and
a plurality of optical attenuators connected between the dispersion compensation optical fibers and the optical reflectors, for attenuating intensity of the optical signals of each wavelength into a predetermined level, respectively.

3. The device of claim 1, further comprising:
an optical circulator for transmitting the optical signal from the input port to the optical band splitter, and transmitting the optical signal from the optical band splitter to the output port; and
a common dispersion compensation optical fiber connected between the optical circulator and the optical band splitter, for commonly compensating dispersion of the whole wavelengths of the optical signal.

4. The device of claim 1, wherein the optical band splitters are installed as many as a number of wavelength bands split from the optical signal.

5. The device of claim 1, wherein the amount of dispersion compensation of the dispersion compensation optical fiber in each wavelength increases when the wavelength of the split wavelength band is long, and decreases when the wavelength of the split wavelength band is short.

6. The device of claim 5, wherein the dispersion compensation optical fiber of the wavelength band having the longest wavelength has the longest length, and the dispersion compensation optical fiber of the wavelength band having the shortest wavelength has the shortest length.

7. The device of claim 6, wherein the length of each dispersion compensation optical fiber is 1/2 of a length for completely removing residual dispersion of the optical signal of the corresponding wavelength band.

8. An optical dispersion compensation method in an optical communication system, comprising the steps of:
splitting an optical signal into transmission wavelength bands; and
removing residual dispersion, by passing the optical signals of each split wavelength band through a different length of dispersion compensation optical fibers, respectively.

9. The method of claim 8, further comprising a step for commonly compensating for dispersion of the whole transmission wavelength bands of the optical signal, by using a common dispersion compensation optical fiber.

10. The method of claim 8, further comprising a step for attenuating intensity of the optical signals of each wavelength band passing through each dispersion compensation optical fiber into a predetermined level, respectively.

11. The method of claim 10, further comprising a step for reflecting the optical signals of each wavelength band, respectively.

12. The method of claim 8, wherein the dispersion compensation optical fiber for compensating for dispersion of the optical signal of the wavelength band having the longest wavelength has the longest length, and the dispersion compensation optical fiber for compensating for dispersion of the optical signal of the wavelength band having the shortest wavelength has the shortest length.

13. The method of claim 11, wherein the length of each dispersion compensation optical fiber is 1/2 of the length for completely removing residual dispersion of the optical signal of the corresponding wavelength band.

14. The method of claim 13, wherein 1/2 of the residual dispersion of the optical signals of each split wavelength band is removed respectively by a different length of dispersion compensation optical fiber, and the optical signals are attenuated into a predetermined level by each optical attenuator, reflected by each optical reflector, and re-pass through each optical attenuator and each dispersion compensation optical fiber.

15. The method of claim 14, wherein the optical signal of the wavelength band having the longest wavelength among the optical signals of the split wavelength bands does not pass through the optical attenuator.
